# EUROPEAN PATENT APPLICATION

(11) **EP 4 697 365 A1**
(43) Date of publication of application: **18.02.2026**
(21) Application number: 24788979.3
(22) Date of filing: 09.04.2024
(51) Int. Cl.: G21F 9/30, C03B 3/00, C03B 5/187

(54) **VITRIFICATION DEVICE AND METHOD FOR NUCLEAR POWER PLANT**

(30) Priority: 13.04.2023 KR 20230048663
(71) Applicant: Korea Hydro & Nuclear Power Co., Ltd, Gyeongju-si, Gyeongsangbuk-do 38120 (KR)
(72) Inventor: KIM, Deuk Man, Daejeon 34101 (KR)
(74) Representative: Glawe, Delfs, Moll
(86) International application number: PCT/KR2024/004682
(87) International publication number: WO 2024/215036

(57) **Abstract**

There is provided a vitrification apparatus and method for a nuclear power plant. The vitrification apparatus includes: an upper chamber unit; a drive unit configured to provide driving force; a lower chamber unit in which glass melt is received in an internal space; and a hollow entry unit configured to enter the internal space of the lower chamber unit through the upper chamber unit and to supply a target material to the glass melt, wherein: the entry unit includes: a body portion having a bar shape, and a branch portion branching in plurality from the body portion; the target material is supplied to the glass melt by being distributed through the body portion and the branch portion; and a variable operation is performed based on the driving force of the drive unit.

## Description

### [TECHNICAL FIELD]

The present disclosure relates to a vitrification apparatus and method for a nuclear power plant.

### [BACKGROUND ART]

Various types of radioactive waste are generated in nuclear power plants. To reduce the volume of such radioactive waste and to ensure stable treatment, vitrification technology for radioactive waste has been developed. In particular, among radioactive waste, combustible waste is generated in various forms such as clothing, paper, resin, and liquid, and is introduced into a glass melter for vitrification.

In a conventional method, combustible waste such as clothing and paper is pelletized, or granular combustible waste such as waste resin is introduced into the glass melter through a screw feeder. However, when waste having a greater amount of dust than the aforementioned combustible waste is introduced into the glass melter, there is a high likelihood of scattering, which may lead to the inflow of waste into an exhaust gas facility or may hinder internal monitoring due to the scattered waste.

### [DISCLOSURE]

### [Technical Problems]

An objective of the present disclosure is to enable stable supply of radioactive waste to a glass melter.

In particular, the objective of the present disclosure is to enable stable operation for vitrification by minimizing dust generation during a radioactive waste feeding process, which is an important part of long-term operation of a melter.

The objectives of the present disclosure are not limited to those described above, and other objectives not mentioned will be clearly understood by those skilled in the art from the following description.

### [Technical Solutions]

According to an aspect of the present disclosure, a vitrification apparatus for a nuclear power plant includes: an upper chamber unit; a drive unit configured to provide driving force; a lower chamber unit in which glass melt is received in an internal space; and a hollow entry unit configured to enter the internal space of the lower chamber unit through the upper chamber unit and to supply a target material to the glass melt, wherein: the entry unit includes: a body portion having a bar shape, and a branch portion branching in plurality from the body portion; the target material is supplied to the glass melt by being distributed through the body portion and the branch portion; and a variable operation is performed based on the driving force of the drive unit.

The entry unit may perform vertical positional movement based on the driving force of the drive unit, and the entry unit may perform the vertical positional movement in response to a level of the glass melt in the lower chamber unit.

The entry unit may perform a circumferential rotation operation based on the driving force, such that a position for feeding the target material to the glass melt is selected.

The vitrification apparatus may further include a mixing assistance unit configured to assist mixing of the glass melt by causing the glass melt in the lower chamber unit to flow, wherein: the mixing assistance unit injects fluid into the internal space of the lower chamber unit; and the position selection is performed such that the entry unit avoids influence from the fluid injection by the mixing assistance unit.

The entry unit may perform the position selection in either a first state before entering the glass melt or a second state after entering the glass melt.

The branch portion of the entry unit may include: a first extension portion extending downward from the body portion; a plurality of second extension portions extending outward from the first extension portion, and third extension portions respectively extending from the second extension portions toward the glass melt, and at least some of the third extension portions may include a corrosion-resistant material and enter the glass melt.

The branch portion of the entry unit may be provided with a plurality of plate-shaped structures disposed along an inner circumferential surface, and the target material may be rotationally flowed and discharged from the entry unit via the plate-shaped structures.

The target material may include radioactive waste and gas (e.g., nitrogen), the plate-shaped structures may be formed in a helical shape for vortex generation in a hollow portion of the branch portion, and the target material may be rotationally mixed and discharged outside the entry unit through the plate-shaped structures.

The vitrification apparatus may further include one or more air-cooled feeding units configured to supply the radioactive waste and the gas together to the entry unit.

The target material may include a predetermined level of moisture content to prevent the target material from solidifying within the entry unit.

The plate-shaped structures may be provided at a position spaced at least 15 cm to 20 cm apart from a lower end of the branch portion in an upward direction.

According to another aspect of the present disclosure, an operating method of a vitrification apparatus for a nuclear power plant includes: receiving glass melt in an internal space of a lower chamber unit; causing an entry unit to enter the internal space of the lower chamber unit through an upper chamber unit; and causing the entry unit to supply a target material to the glass melt in the lower chamber unit, wherein: the vitrification apparatus includes a drive unit configured to provide driving force; the entry unit includes a body portion having a bar shape and a branch portion branching in plurality from the body portion; and the target material is distributed to the glass melt through the body portion and the branch portion.

### [Advantageous Effects]

According to the present disclosure, one or more of the following effects may be achieved.

The present disclosure can enable stable supply of radioactive waste to a glass melter.

In particular, during a radioactive waste feeding process, which is an important part of long-term operation of the melter, dust generation can be minimized to enable stable operation for vitrification.

### [BRIEF DESCRIPTION OF DRAWINGS]

FIG. 1 is a block diagram illustrating the configuration of a vitrification apparatus for a nuclear power plant according to an embodiment of the present disclosure.
FIG. 2 is a block diagram illustrating the configuration of FIG. 1 in further detail.
FIGS. 3 and 4 are diagrams illustrating the configuration of FIG. 1.
FIG. 5 is a diagram illustrating the configuration of FIG. 3.
FIG. 6 is a flowchart sequentially illustrating an operating method of a vitrification apparatus for a nuclear power plant according to an embodiment of the present disclosure.

### [BEST MODE FOR CARRYING OUT THE INVENTION]

The present disclosure provides a vitrification apparatus for a nuclear power plant includes: an upper chamber unit; a drive unit configured to provide driving force; a lower chamber unit in which glass melt is received in an internal space; and a hollow entry unit configured to enter the internal space of the lower chamber unit through the upper chamber unit and to supply a target material to the glass melt, wherein: the entry unit includes: a body portion having a bar shape, and a branch portion branching in plurality from the body portion; the target material is supplied to the glass melt by being distributed through the body portion and the branch portion; and a variable operation is performed based on the driving force of the drive unit.

### [MODES FOR CARRYING OUT THE INVENTION]

Hereinafter, preferred embodiments of the present disclosure will be described in detail with reference to the accompanying drawings. Advantages and features of the present disclosure, and methods for achieving them, will become apparent by referring to the embodiments described below in detail together with the accompanying drawings. However, the present disclosure is not limited to the embodiments set forth below, but may be implemented in various other forms. These embodiments are provided only to ensure a complete disclosure of the invention and to fully convey the scope of the invention to those skilled in the art. The present disclosure is defined only by the scope of the claims. Throughout the specification, like reference numerals refer to like elements.

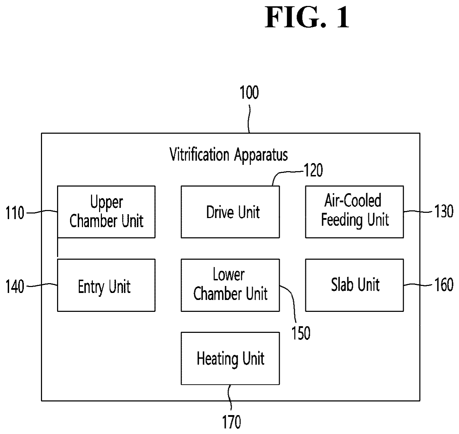

Referring to FIG. 1, a vitrification apparatus for a nuclear power plant according to an embodiment of the present disclosure (hereinafter referred to as "the vitrification apparatus 100") includes an upper chamber unit 110, a drive unit 120, an air-cooled feeding unit 130, an entry unit 140, a lower chamber unit 150, a slab unit 160, and a heating unit 170.

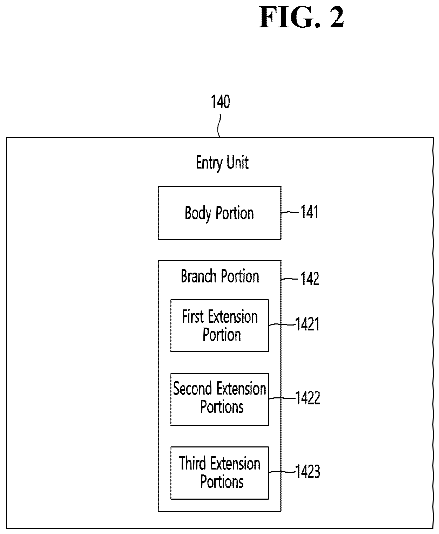

Referring to FIGS. 1 and 2, the entry unit 140 includes a body portion 141 and a branch portion 142. The branch portion 142 includes a first extension section 1421, second extension sections 1422, and third extension sections 1423.

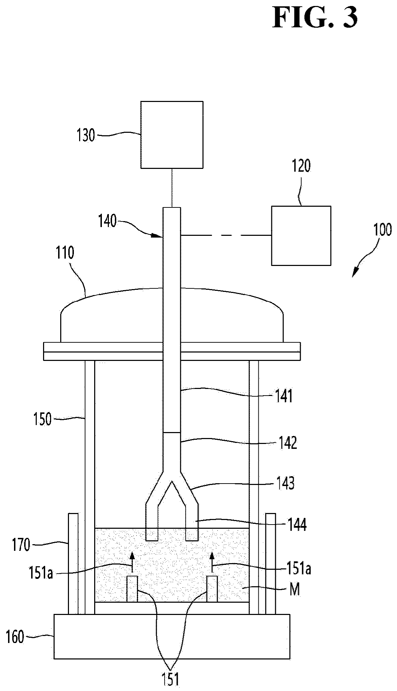

Referring to FIG. 3, the upper chamber unit 110 of the vitrification apparatus 100 corresponds to a structure positioned above the lower chamber unit 150. The drive unit 120 serves to provide driving force on the vitrification apparatus 100.

The lower chamber unit 150 contains glass melt M in its internal space. The entry unit 140 enters the internal space of the lower chamber unit 150 through the upper chamber unit 110.

The entry unit 140 is provided to have a hollow structure for supplying a target material (e.g., radioactive waste in powder form, air, etc.) to the glass melt M. The body portion 141 of the entry unit 140 is provided in a bar shape.

The branch portion 142 of the entry unit 140 branches in plurality from the body portion 141. The target material passes through the body portion 141 and the branch portion 142, and is distributed and introduced into the glass melt M.

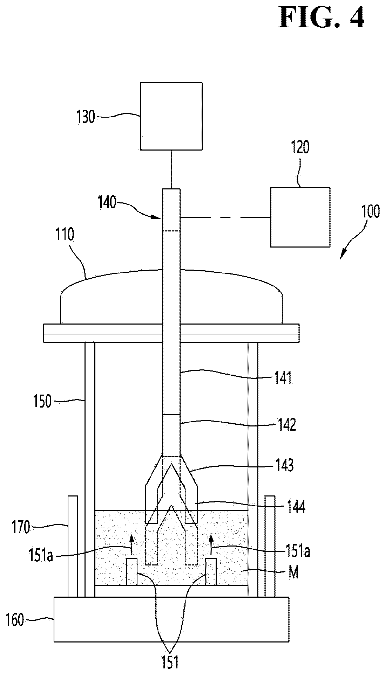

Referring to FIGS. 3 and 4, the entry unit 140 performs a variable operation based on the driving force from the drive unit 120. For example, the entry unit 140 moves vertically in response to the level of the glass melt M in the lower chamber unit 150.

In addition, the entry unit 140 performs rotational motion in a circumferential direction based on the driving force. Through this, positional selection for feeding the target material into the glass melt M is achieved.

The lower chamber unit 150 is provided with a mixing assistance unit 151 to assist mixing of the glass melt M by causing the glass melt M to flow. The mixing assistance unit 151 injects fluid into the internal space of the lower chamber unit 150.

Here, the positional selection of the entry unit 140 is performed to avoid the influence from the fluid injection by the mixing assistance unit 151.

The entry unit 140 performs positional selection in either a first state before entering the glass melt M or a second state after entering the glass melt M.

The first extension section 1421 of the branch portion 142 extends downward from the body portion 141. The second extension sections 1422 of the branch portion 142 extend outward from the first extension section 1421.

The third extension sections 1423 of the branch portion 142 extend toward the glass melt M from the respective second extension portions 1422. At least some of the third extension sections 1423 include a corrosion-resistant material and enter the glass melt M.

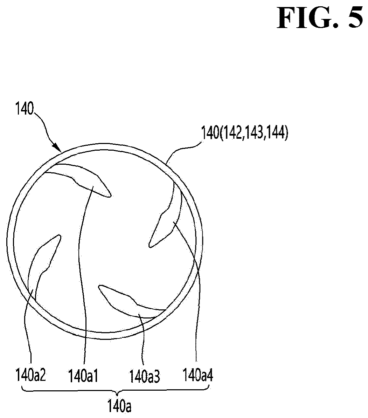

Referring to FIGS. 3 and 5, the branch portion 142 of the entry unit 140 is provided with a plurality of plate-shaped structures 140a disposed along the inner circumferential surface of the branch portion 142. The target material is rotated and discharged through the entry unit 140 via the plate-shaped structures 140a.

In addition, the plate-shaped structures 140a are formed in a helical shape in the hollow portion of the branch portion 142 to generate a vortex. The target material is rotationally mixed and discharged to the outside of the entry unit 140 through the plate-shaped structures 140a.

One or more air-cooled feeding units 130 are provided to allow radioactive waste as the target material and gas (e.g., nitrogen) in the air to be supplied together to the entry unit 140.

Preferably, the target material includes a predetermined level of moisture content to prevent the target material from solidifying within the entry unit 140. The plate-shaped structures 140a are provided at a position spaced at least approximately 15 cm to 20 cm apart from the lower end of the branch portion 142 in an upward direction.

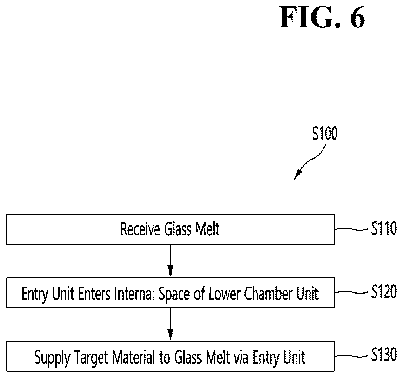

Referring to FIG. 6, in an operating method S100 of a vitrification apparatus for a nuclear power plant according to an embodiment of the present disclosure, glass melt M is received in an internal space of a lower chamber unit 150 of a vitrification apparatus 100.

In addition, an entry unit 140 of the vitrification apparatus 100 enters the internal space of the lower chamber unit 150 through an upper chamber unit 110 of the vitrification apparatus 100.

The entry unit 140 supplies a target material to the glass melt M in the lower chamber unit 150. A drive unit 120 of the vitrification apparatus 100 provides driving force required to perform vitrification.

The entry unit 140 includes a body portion 141 having a predetermined shape and a branch portion 142 branching in plurality from the body portion 141. The target material is distributed to the glass melt M through the body portion 141 and the branch portion 142.

While embodiments of the present disclosure have been described above with reference to the accompanying drawings, it will be understood by those skilled in the art that the present disclosure may be implemented in other specific forms without altering the technical spirit or essential characteristics thereof. Therefore, the foregoing embodiments should be understood as illustrative in all respects and not restrictive.

## Claims

1. A vitrification apparatus for a nuclear power plant, comprising:
an upper chamber unit;
a drive unit configured to provide driving force;
a lower chamber unit in which glass melt is received in an internal space; and
a hollow entry unit configured to enter the internal space of the lower chamber unit through the upper chamber unit and to supply a target material to the glass melt,
wherein
the entry unit includes: a body portion having a bar shape, and a branch portion branching in plurality from the body portion,
the target material is supplied to the glass melt by being distributed through the body portion and the branch portion, and
a variable operation is performed based on the driving force of the drive unit.

2. The vitrification apparatus of claim 1, wherein
the entry unit performs vertical positional movement based on the driving force of the drive unit, and
the entry unit performs the vertical positional movement in response to a level of the glass melt in the lower chamber unit.

3. The vitrification apparatus of claim 2, wherein the entry unit performs a circumferential rotation operation based on the driving force, such that a position for feeding the target material to the glass melt is selected.

4. The vitrification apparatus of claim 3, further comprising:
a mixing assistance unit configured to assist mixing of the glass melt by causing the glass melt in the lower chamber unit to flow,
wherein
the mixing assistance unit injects fluid into the internal space of the lower chamber unit, and
the position selection is performed such that the entry unit avoids influence from the fluid injection by the mixing assistance unit.

5. The vitrification apparatus of claim 3, wherein the entry unit performs the position selection in either a first state before entering the glass melt or a second state after entering the glass melt.

6. The vitrification apparatus of claim 4, wherein
the branch portion of the entry unit includes: a first extension portion extending downward from the body portion; a plurality of second extension portions extending outward from the first extension portion, and third extension portions respectively extending from the second extension portions toward the glass melt, and
at least some of the third extension portions include a corrosion-resistant material and enter the glass melt.

7. The vitrification apparatus of claim 1, wherein
the branch portion of the entry unit is provided with a plurality of plate-shaped structures disposed along an inner circumferential surface, and
the target material is rotationally flowed and discharged from the entry unit via the plate-shaped structures.

8. The vitrification apparatus of claim 7, wherein
the target material includes radioactive waste and gas,
the plate-shaped structures are formed in a helical shape for vortex generation in a hollow portion of the branch portion, and
the target material is rotationally mixed and discharged outside the entry unit through the plate-shaped structures.

9. The vitrification apparatus of claim 8, further comprising:
one or more air-cooled feeding units configured to supply the radioactive waste and the gas together to the entry unit.

10. The vitrification apparatus of claim 8, wherein the target material includes a predetermined level of moisture content to prevent the target material from solidifying within the entry unit.

11. The vitrification apparatus of claim 7, wherein the plate-shaped structures are provided at a position spaced at least 15 cm to 20 cm apart from a lower end of the branch portion in an upward direction.

12. An operating method of a vitrification apparatus for a nuclear power plant, comprising:
receiving glass melt in an internal space of a lower chamber unit;
causing an entry unit to enter the internal space of the lower chamber unit through an upper chamber unit; and
causing the entry unit to supply a target material to the glass melt in the lower chamber unit,
wherein the vitrification apparatus includes a drive unit configured to provide driving force,
the entry unit includes a body portion having a bar shape and a branch portion branching in plurality from the body portion, and
the target material is distributed to the glass melt through the body portion and the branch portion.
